(19) Europäisches Patentamt
European Patent Office
Office européen des brevets

(11) Numéro de publication: **0 204 139**
**A2**

(12) # DEMANDE DE BREVET EUROPEEN

(21) Numéro de dépôt: **86105822.0**

(22) Date de dépôt: **28.04.86**

(51) Int. Cl.[4]: **C 09 B 48/00**
C 07 D 471/04
//(C07D471/00, 221:00, 221:00)

(30) Priorité: **03.05.85 DE 3515875**

(43) Date de publication de la demande:
**10.12.86 Bulletin 86/50**

(84) Etats contractants désignés:
**CH DE FR GB IT LI**

(71) Demandeur: **HOECHST AKTIENGESELLSCHAFT**
**Postfach 80 03 20**
**D-6230 Frankfurt am Main 80(DE)**

(72) Inventeur: **Spietschka, Ernst, Dr.**
**Am Rödchen 8**
**D-6270 Idstein(DE)**

(72) Inventeur: **Prokschy, Frank, Dr.**
**Grimoldweg 15**
**D-6230 Frankfurt am Main 80(DE)**

(54) **Procédé de préparation de quinacridones linéaires.**

(57) Verfahren zur Herstellung linearer Chinacridone der Formel (1)

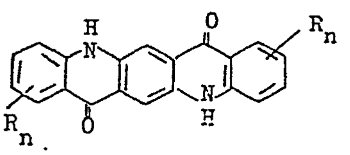

(1)

worin R ein Wasserstoff-, Fluor-, Chloro- oder Bromatom oder ein Alkyl$_{C_1-C_6}$, Alkoxy$_{C_1-C_3}$ oder Phenylgruppe, oder einen anellierten Benzolring, eine Phenylamino- oder Phenoxygruppe, die am aromatischen Kern durch Fluor-, Chlor- oder Bromatome der Alkyl$_{C_1-C_4}$-gruppen substituiert sein können, und n eine Zahl von 0 bis 2 bedeuten, wobei im Fall $n \neq 0$ die am gleichen Benzolring oder an den beiden Benzolringen befindlichen Substituenten R gleich oder verschieden sein können, durch Oxidation von linearen 6,13-Dihydrochinacridonen der Formel (2)

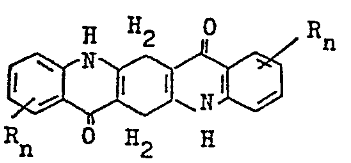

(2)

worin R und n die genannten Bedeutungen haben, vorteilhaft herstellen kann, indem man 1 mol der letztgenannten Verbindungen mit 1 bis 2 mol Iod in einem hochsiedenden, gegenüber den Reaktionskomponenten inerten organischen Lösemittel bei Temperaturen von etwa 180°C bis etwa 280°C erhitzt.

EP 0 204 139 A2

Croydon Printing Company Ltd.

# Verfahren zur Herstellung von linearen Chinacridonen

Gegenstand der Erfindung ist ein neues, gegenüber dem Stand der Technik vorteilhaftes Verfahren zur Herstellung von Chinacridonen durch Oxidation von 6,13-Dihydrochinacridonen mit Iod in geeigneten organischen Lösemitteln.

Bekanntlich haben in der Reihe der polycylischen Pigmente Chinacridone (Formel (D) in dem weiter unten gegebenen Reaktionsschema) wegen ihrer hohen Echtheiten auf den verschiedenen Anwendungsgebieten eine große wirtschaftliche Bedeutung. Von den verschiedenen Methoden ihrer Herstellung (S.S. Labana und L.L. Labana, Chem. Rev. 67, 1 (1967)) haben sich technisch zwei Verfahren bewährt, die beide von 3,6-Dihydro-2,5-diarylaminoterephthalsäureestern (Formel (A) im Reaktionsschema) ausgehen und sich im Prinzip dadurch unterscheiden, in welcher Reihenfolge Ringschluß und Oxidation durchgeführt werden:

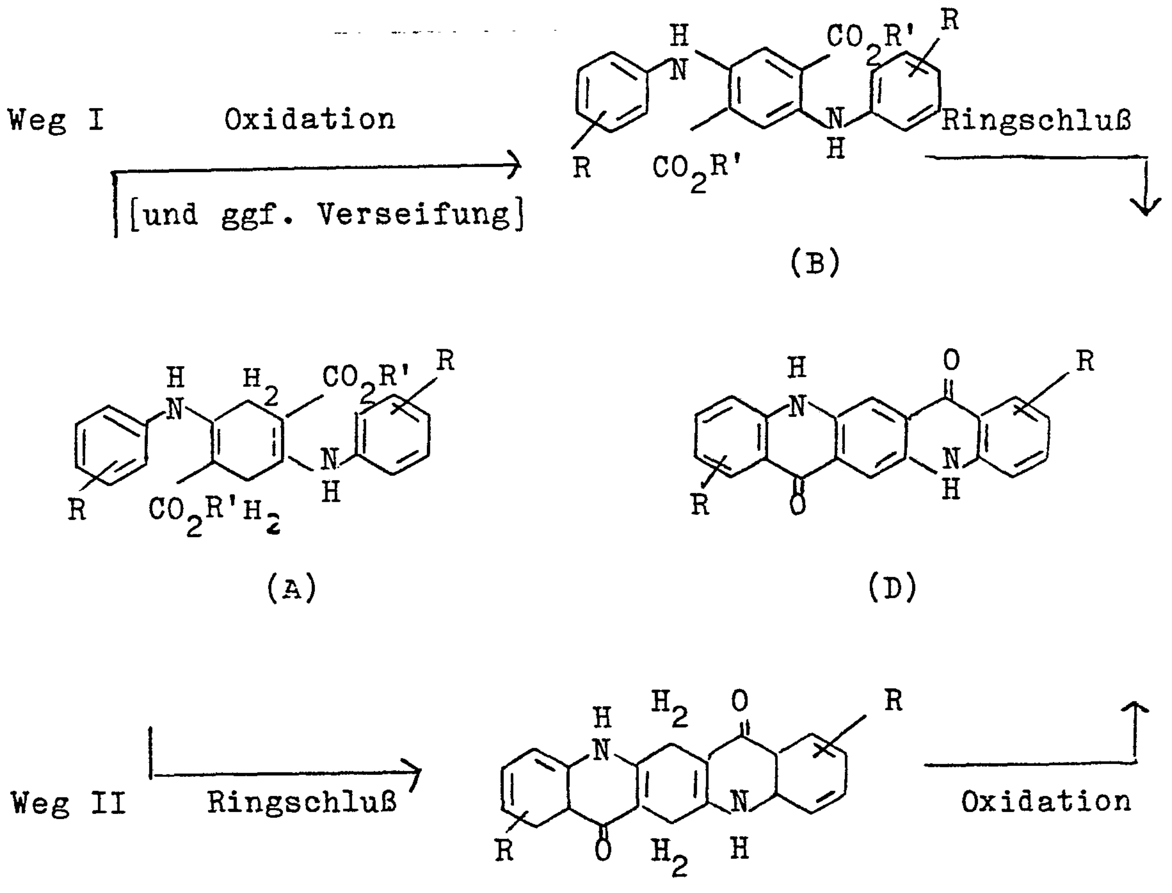

(B)

(A)

(D)

(C)

Nach Weg I wird der 3,6-Dihydro-2,5-diarylamino-terephthalsäureester (Formel (A)) zuerst zum 2,5-Diarylaminoterephthalsäureester (Formel (B)) oxidiert, ggf. zur Dicarbonsäure (R'= H) verseift, und Ester bzw. Carbonsäure dann in Polyphosphorsäure oder in saurem Polyphosphorsäureester bzw. in einem hochsiedenden Lösemittel in Gegenwart einer Säure bzw. eines Säurechlorids bei erhöhter Temperatur zum Chinacridon (Formel (D)) cyclisiert.

Bei der bekannten Synthese nach Weg II erfolgt in einem hochsiedenden Lösemittel zuerst der Ringschluß von (A) zum 6,13-Dihydrochinacridon (C), welches in bekannter Weise isoliert und anschließend zum Chinacridon (D) oxidiert wird.

Als Oxidationsmittel hierfür dienen im wesentlichen Luftsauerstoff, Schwefel, Alkalimetallpolysulfide, Chinone und aromatische Nitroverbindungen, die meist in wäßrig alkalischem Medium, gegebenenfalls unter Zusatz eines wasserlöslichen organischen Lösemittels, eingesetzt werden. Bevorzugt wird das System Natrium-m-nitrobenzolsulfonat / wäßrige Natronlauge / Alkohol.

Bei Ringschluß von (B) (R'= H) in Polyphosphorsäure oder saurem Polyphosphorsäureester und anschließender Hydrolyse erhält man nach Weg I bereits ein feinteiliges Rohchinacridon, das je nach Art der vorgenommenen Hydrolyse und der Nachbehandlung deckende oder transparente Pigmente der handelsüblichen ß- oder γ-Modifikationen liefert (DE-PS 1 150 046, DE-PS 1 184 881, DE-PS 1 196 619, DE-AS 1 268 586). Nachteilig bei diesem Verfahren ist die relativ große Menge an Polyphosphorsäure, die nicht regeneriert werden kann.

Beim Verfahren nach Weg II läßt sich das beim Ringschluß zu (C) verwendete Lösemittel zwar weitgehend regenerieren, doch werfen die bei der Oxidation zu (D) entstehenden Nebenprodukte ökologische Probleme auf. Weiterhin besteht

bei den verwendeten Oxidationsmitteln die Gefahr einer Über- oder nur teilweisen Oxidation, was zu uneinheitlichen Produkten führt. Eine Steuerung zu den gewünschten Kristallmodifikationen läßt sich durch die Art der Oxidation sowie durch entsprechende Zusätze bei der Mahlung der hochkristallinen Rohchinacridone erreichen (US-PS 2 969 366, US-PS 3 007 930, US-PS 3 009 916, US-PS 3 148 075, US-PS 3 475 436, US-PS 3 632 588).

Beide bekannten Verfahren (Weg I bzw. Weg II) haben den Nachteil, daß die auf dem Weg von (A) nach (D) liegenden Zwischenverbindungen (B) bzw. (C) zwischenisoliert werden müssen.

Aus wirtschaftlichen und ökologischen Gründen bestand somit Bedarf nach einem Verfahren, mit dem man ohne Zwischenisolierung aus 3,6-Dihydro-2,5-diarylamino-terephthalsäureestern (A) direkt zu den entsprechenden Chinacridonen (D), und im Falle des unsubstituierten Chinacridons ((D), R= H) auch zu den gewünschten Kristallmodifikationen gelangt, und das keine der weiter oben aufgezeigten Nachteile besitzt.

Es wurde nun gefunden, daß man lineare Chinacridone der allgemeinen Formel (1)

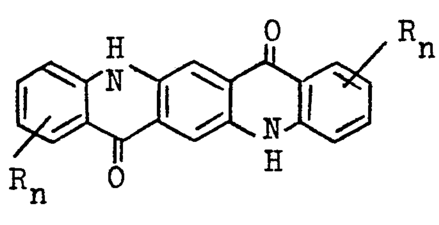

(1)

in welcher R ein Wasserstoff-, Fluor-, Chlor- oder Bromatom oder ein Alkyl$_{C_1-C_6}$, Alkoxy$_{C_1-C_3}$ oder Arylgruppe, beispielsweise eine Phenylgruppe, oder einen anellierten Benzolring, eine Phenylamino- oder Phenoxygruppe, die am aromatischen Kern durch Fluor-, Chlor- oder Bromatome oder Alkyl$_{C_1-C_4}$gruppen substituiert sein können, und n eine Zahl

von 0 bis 2 bedeuten, wobei im Fall n ≠ 0 die am gleichen Benzolring oder an den beiden Benzolringen befindlichen Substituenten R gleich oder verschieden sein können, durch Oxidation von linearen 6,13-Dihydrochinacridonen der allgemeinen Formel (2)

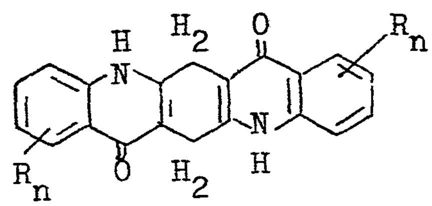

(2)

in welcher R und n die vorstehend genannten Bedeutungen haben, vorteilhaft herstellen kann, indem man die letztgenannten Verbindungen mit Iod in einem hochsiedenden organischen Lösemittel bei Temperaturen von etwa 180°C bis etwa 280°C erhitzt.

Es versteht sich von selbst, daß die eingesetzten organischen Lösemittel gegenüber den Reaktionsverbindungen, insbesondere dem als Oxidationsmittel eingesetzten Iod inert sein müssen. Geeignete Lösemittel sind beispielsweise Nitrobenzol, Diphenyl, Diphenylether, N-Methylpyrrolidon (NMP) und Chlornaphthalin, insbesondere aber eine Mischung aus 76,5 % Diphenylether und 23,5 % Diphenyl, eine Mischung, die unter dem Namen ®Dowtherm A bekannt ist [US-PS 4 258 190].

Die zweckmäßigerweise anzuwendenden Mengen an organischem Lösemittel und Iod, bezogen auf Ausgangsverbindung, hängen von den Substituenten R und deren Anzahl im Molekül der Ausgangsverbindung der Formel (2) ab. So reicht zur Oxidation des nichtsubstituierten 6,13-Dihydrochinacridons die Anwendung der stöchiometrischen Menge, d.h. von 1 Mol Iod pro Mol Ausgangsverbindung aus, während zur Oxidation beispielsweise der Dichlorverbindung ein gewisser Überschuß,

zweckmäßigerweise eine Menge von 1 - 2 mol, vorzugsweise 1,1 - 1,3 mol Iod, angewandt wird. Die optimale Menge an anzuwendendem organischen Lösemittel ist, in Abhängigkeit von den Substituenten R im Molekül der Ausgangsverbindung, so zu bemessen, daß eine leicht rührbare Reaktionsmischung (Suspension) gegeben ist. Chlor- oder alkylsubstituiertes Ausgangsprodukt benötigt beispielsweise mehr Lösemittel als nichtsubstituiertes Ausgangsprodukt.

Der bei der erfindungsgemäßen Reaktion

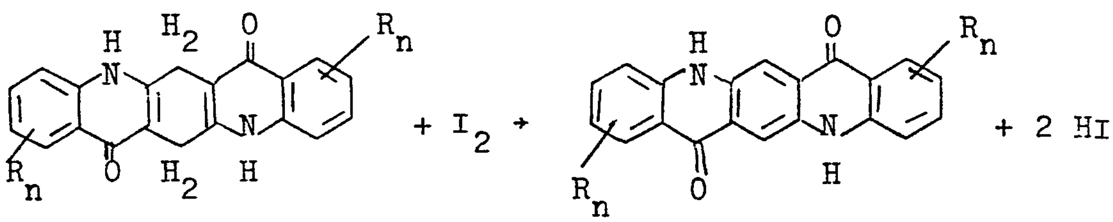

entstehende Iodwasserstoff wird während der Reaktion übergetrieben und in verdünnter wäßriger Alkalimetallhydroxidlösung, beispielsweise Natronlauge, absorbiert. Aus der wäßrig alkalischen Lösung wird dann durch Zugabe eines geeigneten Oxidationsmittels, beispielsweise Wasserstoffperoxid, das Iod weitgehend zurückgewonnen. Führt man die oxidative Rückgewinnung des Iods aus der wäßrig alkalischen Lösung des Iodwasserstoffs in Gegenwart eines der als Reaktionsmedium geeigneten inerten organischen Lösemittel durch, so kann man nach Entfernung des Wassers (Trocknung) und Einstellen der gewünschten Iodkonzentration das iodhaltige organische Lösemittel erneut für einen Reaktionsansatz verwenden.

Das nach erfolgter Reaktion und Abtrennung des gebildeten Iodwasserstoffs und des erhaltenen Chinacridons anfallende organische Lösemittel kann in bekannter Weise destillativ regeneriert und erneut eingesetzt werden.

Zur Durchführung des erfindungsgemäßen Verfahrens sei im einzelnen noch folgendes ausgeführt:

Da die weiter oben als geeignet genannten organischen Lösemittel innerhalb des Reaktionstemperaturbereichs von etwa 180°C bis etwa 280°C sieden, ist es zweckmäßig, die Oxidation jeweils bei der Siedetemperatur des angewandten organischen Lösemittels vorzunehmen (siehe hierzu die Angaben in den Tabellenbeispielen).

Die Reaktionsdauer, d.h. die Reaktionszeit zur Gewährleistung einer quantitativen Oxidation hängt naturgemäß von der Struktur der eingesetzten Ausgangsverbindung, d.h. von dem Substituenten R im Molekül der Verbindung der Formel (2) ab. Die Reaktionszeiten bewegen sich üblicherweise zwischen 2 und 8 Stunden. Chlorsubstituierte Ausgangsverbindungen benötigen beispielsweise eine längere Oxidationszeit als nichtsubstituierte.

Die erfindungsgemäße Oxidation kann zweckmäßigerweise nach zwei verschiedenen Varianten vorgenommen werden. Bei der einen Variante (Methode A) wird das 6,13-Dihydrochinacridon der genannten Formel (2) im siedenden Lösemittel vorgelegt und dazu eine Lösung von Iod in diesem Lösemittel getropft. Nach dieser Methode erhält man im Falle der Oxidation des nichtsubstituierten 6,13-Dihydrochinacridons (α-Kristallphase in ®Dowtherm A als Lösemittel) unsubstituiertes Chinacridon der γ-Kristallphase. Bei der anderen Variante (Methode B) wird das 6,13-Dihydrochinacridon (α-Kristallphse, ®Dowtherm A als Lösemittel) der genannten Formel (2) bei niederer Temperatur mit der benötigten Menge an Iod versetzt und auf die zur Reaktion erforderliche Temperatur gebracht. Nach dieser Methode erhält man bei nichtsubstituiertem Ausgangsprodukt das Chinacridon in der ß-Kristallphase.

Hinsichtlich Definition von α, ß- und γ-Kristallphase einschließlich zugehöriger Röntgenbeugungsdiagramme bei linearen Chinacridonen sei auf die US-PS 2 969 366 verwiesen.

Bei der in der japanischen Offenlegungsschrift Sho-54-135821 beschriebenen Verwendung einer Reihe von Oxidationsmitteln zur Oxidation von Dihydrochinacridon zum Chinacridon wird das Oxidationsmittel, u.a. Iod, in wäßrig alkalischem Medium in Gegenwart eines wasserlöslichen organischen Lösemittels, wie Dimethylsulfoxid, eingesetzt, was bedeutet, daß hierbei - im Falle der Verwendung von Iod - nicht das Iod, sondern das Hypoioditon als oxidierendes Agens wirkt. Gegenüber dem dort beschriebenen Verfahren kommen dem erfindungsgemäßen Verfahren als Vorteile zugute, daß keine Gefahr einer mit schädlichen Auswirkungen behafteten Überoxidation besteht, eine leichtere Regenerierbarkeit der eingesetzten organischen Lösemittel gegeben ist und eine Steuerung des Verfahrens im Falle der Oxidation des unsubstituierten 6,13-Dihydrochinacridons hinsichtlich zu erhaltender Kristallphase möglich ist. Während man beim erwähnten bekannten Verfahren nur die ß-Kristallphase des linearen Chinacridons erhält, kann man beim erfindungsgemäßen Verfahren die Oxidation des nichtsubstituierten 6,13-Dihydrochinacridons durch Wahl der Arbeitsweise und des organischen Lösemittels in Richtung der gewünschten ß- oder γ-Kristallphase des linearen Chinacridons lenken, welche nach bekannten Methoden in die entsprechenden wertvollen Pigmente überführt werden können.

Nach dem erfindungsgemäßen Verfahren werden die linearen Chinacridone der genannten Formel (1) in hoher Reinheit und Kristallinität sowie in hoher Ausbeute erhalten. Ein besonderer Vorteil des erfindungsgemäßen Verfahrens ist darin zu erblicken, daß die Herstellung der Chinacridone der Formel (1), ausgehend von den 3,6-Dihydro-2,5-diarylaminoterephthalsäureestern ((A) im eingangs aufgezeigten Reaktionsschema/Weg II) über die Stufe des 6,13-Dihydrochinacridons ohne Zwischenisolierung der letztgenannten Verbindung, d.h. in einer Eintopfreaktion möglich ist. Hierbei kann alternativ so vorgegangen werden, daß man

nach erfolgtem Ringschluß entweder abkühlt und nach Iodzusatz erneut erhitzt (Methode B), oder daß man zu der noch siedenden Suspension des erhaltenen 6,13-Dihydrochinacridons eine Lösung des Iods in dem gleichen organischen Lösemittel zutropft (Methode A).

Nachstehend werden die Methoden A und B in Verbindung mit den Tabellenbeispielen 1 - 31 beschrieben:

Methode A

Zu a Teilen 6,13-Dihydrochinacridon der Formel (2) in c Teilen Lösemittel wird bei Siedetemperatur innerhalb von 30 - 90 Minuten eine Lösung aus b Teilen Iod in d Teilen des gleichen Lösemittels getropft und anschließend die Reaktionsmischung noch x Stunden bei Temperatur T gehalten. Nach Abdestillation von ca. 20 % des Lösemittels bei vermindertem Druck wird der Rückstand abgesaugt, mit Ethanol und Dichlormethan gewaschen und getrocknet.

Methode B

a Teile 6,13-Dihydrochinacrion der Formel (2) und b Teile Iod werden in c Teilen Lösemittel x Stunden bei Temperatur T gehalten. Die Aufarbeitung erfolgt gemäß Methode A.

Bei Verwendung einer größeren Menge an Iod empfiehlt es sich, die erhaltenen Produkte noch einer Nachbehandlung mit alkalischer Natriumthiosulfat-Lösung zu unterwerfen.

In den nachfolgenden Tabellenbeispielen sind jeweils Zahlenwerte für die Parameter a, b, c, d, x und T sowie die Struktur des jeweils eingesetzten 6,13-Dihydrochinacridons bzw. des erhaltenen Chinacridons durch Angabe der Definition von R in Ausgangs- und Endprodukt angegeben. Außerdem werden die erzielten Ausbeuten und die ggf. erhaltenen Kristallphasen angegeben.

| Beispiel | R | Methode | a | c | b | d | Lösemittel (Kp. °C) | x | T °C | Y % | Phase |
|---|---|---|---|---|---|---|---|---|---|---|---|
| | | | | | | | | | Erhitzen | | |
| 1 | H | B | 6.3 | 100 | 5.0 | | Dowtherm A (248°C) | 4 | am Rückfluß | 98 | ß |
| 2 | H | A | 12.6 | 100 | 10 | 100 | " | 1.5 | " | 93 | γ |
| 3 | H | B | 12.6 | 200 | 11.2 | | NMP (202°C) | 5 | " | 92 | γ |
| 4 | H | A | 6.3 | 50 | 5.1 | 45 | Nitrobenzol (211°C) | 2.5 | " | 87 | ß |
| 5 | H | B | 6.3 | 110 | 5.1 | | Dowtherm A NMP=9/1 | 4 | " | 94 | γ |
| 6 | H | B | 6.3 | 100 | 5.1 | | Diphenyl (256°C) | 4 | " | 86 | ß |
| 7 | H | B | 6.3 | 100 | 5.1 | | Diphenylether (252°C) | 4 | " | 87 | γ |
| 8 | H | A | 12.6 | 100 | 11.6 | 150 | 1-Chlornaphthalin (263°C) | 4 | " | 92 | γ |
| 9 | H | B | 12.6 | 200 | 10.6 | | 1-Chlornaphthalin | 4 | " | 95 | γ |
| 10 | H *) | A | 6.3 | 80 | 5.2 | 63 | Dowtherm A (248°C) | 4.5 | " | 98 | γ |
| 11 | H *) | B | 6.3 | 150 | 5.2 | | " | 4 | " | 99 | γ |
| 12 | 2,9-$CH_3$ | B | 13.8 | 150 | 11 | | Dowtherm A (248°C) | 3 | " | 93 | |
| 13 | 4,11-$CH_3$ | A | 13.6 | 50 | 10.2 | 91 | " | 2 | " | 92 | |
| 14 | " | B | 13.8 | 150 | 11 | | " | 4 | " | 93 | |
| 15 | 2,4,9,11-$CH_3$ | A | 14.8 | 250 | 10.2 | 91 | " | 2 | " | 99 | |
| 16 | " | B | 20.6 | 400 | 23.5 | | " | 4.5 | " | 99 | |
| 17 | 4,11-$C_2H_5$ | B | 14.8 | 150 | 10.2 | | " | 4 | " | 91 | |
| 18 | 4,11-$iC_3H_7$ | B | 15.9 | 180 | 10.3 | | " | 4 | " | 83 | |
| 19 | 2,9-$tC_4H_9$ | B | 9.5 | 110 | 6.2 | | " | 3 | " | 87 | |
| 20 | 2,9-Cl | B | 10.2 | 200 | 8.4 | | " | 4 | " | 86 | |

*) Es wurde unsubstituiertes Dihydrochinacridon in der ß-Kristallphase eingesetzt, ansonsten (Beispiele 1 - 9) in der α-Kristallphase

| Beispiel | R | Methode | a | c | b | d | Lösemittel (Kp. °C) | x | T °C | Y % | Phase |
|---|---|---|---|---|---|---|---|---|---|---|---|
| 21 | 4,11-Cl | A | 15.3 | 150 | 12.7 | 154 | Dowtherm A (248°C) | 5 | Erhitzen am Rückfluß | 96 | |
| 22 | " | B | 10.8 | 120 | 7 | | " | 3 | " | 93 | |
| 23 | 2,4,9,11-Cl | B | 13.6 | 150 | 8 | | " | 3 | " | 80 | |
| 24 | 2,9-F | B | 14 | 200 | 10.2 | | " | 4 | " | 93 | |
| 25 | 4,11-Br | B | 12.8 | 180 | 8.4 | | " | 4 | " | 95 | |
| 26 | 2,9-Br | B | 14.2 | 200 | 10.0 | | " | 4 | " | 81 | |
| 27 | 2,9-$OCH_3$ | B | 15 | 150 | 10.2 | | " | 3 | " | 96 | |
| 28 | 2,9-O-$C_6H_5$ | B | 10 | 100 | 5.2 | | " | 3 | " | 99 | |
| 29 | 2,9-NH-$C_6H_5$ | A | 19.9 | 200 | 12.7 | 154 | " | 4 | " | 97 | |
| 30 | " | B | 10 | 100 | 5.2 | | " | 3 | " | 92 | |
| 31 | 2,9-$C_6H_5$ | A | 13.5 | 100 | 8.0 | 97 | " | 4 | " | 94 | |

Beispiele für die Durchführung des erfindungsgemäßen Verfahrens ausgehend von 3,6-Dihydro-2,5-diarylamino-terephthalsäurealkylestern ((A) im eingangs genannten Reaktionsschema) ohne Zwischenisolierung des zunächst gebildeten 6,13-Dihydrochinacridons ((C) im eingangs genannten Reaktionsschema) (Eintopfreaktion), welches als Ausgangsverbindung bei der erfindungsgemäßen Oxidationsreaktion dient:

a. Eine Suspension von 37,8 Teilen 3,6-Dihydro-2,5-dianilino-terephthalsäuredimethylester in 200 Teilen $^R$Dowtherm A wird zu 150 Teilen siedendem $^R$Dowtherm A getropft. Anschließend wird der Ansatz weitere 90 Minuten bei Siedetemperatur gehalten. Dann werden ca. 100 Teile des Lösemittels abdestilliert und darauf 254 Teile einer 10 %igen Lösung von Iod in $^R$Dowtherm A zugetropft. Die Aufarbeitung erfolgt wie weiter oben unter "Methode A" beschrieben. Gewonnen werden 27,7 Teile Chinacridon in der γ-Kristallphase, was einer Ausbeute von 89 % der Theorie (bezogen auf 3,6-Dihydro-2,5-dianilinoterephthalsäuredimethylester) entspricht.

b.1) Eine Suspension von 37,8 Teilen 3,6-Dihydro-2,5-dianilino-terephthalsäuredimethylester in 200 Teilen $^R$Dowtherm A wird zu 150 Teilen siedendem $^R$Dowtherm A getropft. Anschließend wird der Ansatz weitere 90 Minuten bei Siedetemperatur gehalten. Nach Abdestillation von ca. 100 Teilen des Lösemittels wird die Mischung auf ca. 140°C abgekühlt, worauf man 25,4 Teile Iod zugibt und weitere 4 Stunden bei Siedetemperatur hält. Die Aufarbeitung erfolgt wie weiter oben unter "Methode A" beschrieben. Gewonnen werden 27,8 Teile Chinacridon in der ß-Kristallphase, was einer Ausbeute von 89 % der Theorie (bezogen auf 3,6-Dihydro-2,5-dianilinoterphthalsäuredimethylester) entspricht.

b.2) Verfährt man wie vorstehend unter Beispiel b 1) beschrieben, jedoch mit dem Unterschied, daß man von 40,6 Teilen

3,6-Dihydro-2,5-di-(p-methylanilino)-terephthalsäuredimethylester ausgeht, so erhält man 32,2 Teile 2,9-Dimethylchinacridon, was einer Ausbeute von 95 % der Theorie (bezogen auf 3,6-Diyhdro-2,5-di-(p-methylanilino)-terephthalsäuredimethylester) entspricht.

b.3) Verfährt man wie vorstehend unter Beispiel b 1) beschrieben, jedoch mit dem Unterschied, daß man von 44,7 Teilen 3,6-Dihydro-2,5-di-(p-chloranilino)-terephthalsäuredimethylester ausgeht, so erhält man 32,7 Teile 2,9-Dichlorchinacridon, was einer Ausbeute von 80 % der Theorie (bezogen auf 3,6-Dihydro-2,5-di-(p-chloranilino)-terephthalsäuredimethylester) entspricht.

Patentansprüche:

1. Verfahren zur Herstellung linearer Chinacridone der allgemeinen Formel (1)

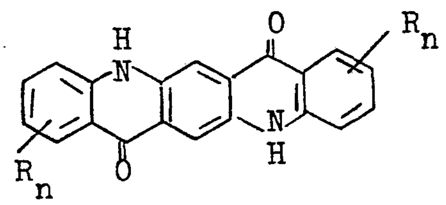

(1)

in welcher R ein Wasserstoff-, Fluor-, Chlor- oder Bromatom oder ein $Alkyl_{C_1-C_6}$, $Alkoxy_{C_1-C_3}$ oder Phenylgruppe, oder einen anellierten Benzolring, eine Phenylamino- oder Phenoxygruppe, die am aromatischen Kern durch Fluor-, Chlor- oder Bromatome oder $Alkyl_{C_1-C_4}$-gruppen substituiert sein können, und n eine Zahl von 0 bis 2 bedeuten, wobei im Fall n ≠ 0 die am gleichen Benzolring oder an den beiden Benzolringen befindlichen Substituenten R gleich oder verschieden sein können, durch Oxidation von linearen 6,13-Dihydrochinacridonen der allgemeinen Formel (2)

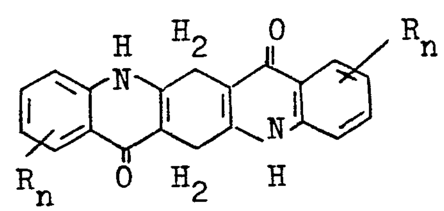

(2)

in welcher R und n die vorstehend genannten Bedeutungen haben, vorteilhaft herstellen kann, indem man 1 mol der letztgenannten Verbindungen mit 1 bis 2 mol Iod in einem hochsiedenden, gegenüber den Reaktionskomponenten inerten organischen Lösemittel bei Temperaturen von etwa 180°C bis etwa 280°C erhitzt.

2. Verfahren nach Anspruch 1, dadurch gekennzeichnet, daß man in einer Mischung aus 76,5 % Diphenylether und

23,5 % Diphenyl, oder in Nitrobenzol, Diphenyl, Diphenylether, N-Methylpyrrolidon oder Chlornaphthalin als organischem Lösemittel oxidiert.

3. Verfahren nach Ansprüchen 1 oder 2, dadurch gekennzeichnet, daß man den bei der Oxidation entstehenden Iodwasserstoff während der Reaktion austreibt, in verdünnter wäßriger Alkalimetallhydroxidlösung absorbiert, das Iod aus der wäßrig alkalischen Lösung durch Zugabe eines Oxidationsmittels zurückgewinnt und erneut als Oxidationsmittel verwendet.

4. Verfahren nach Anspruch 3, dadurch gekennzeichnet, daß man die oxidative Rückgewinnung des Iods aus der wäßrig alkalischen Lösung des Iodwasserstoffs in Gegenwart eines als Reaktionsmedium geeigneten inerten Lösemittels durchgeführt, das iodhaltige organische Lösemittel trocknet, die gewünschte Iodkonzentration einstellt und das iodhaltige Lösemittel wiederverwendet.

5. Verfahren nach Ansprüchen 1 oder 2, dadurch gekennzeichnet, daß man das 6,13-Dihydrochinacridon der genannten Formel (2) im siedenden organischen Lösemittel vorlegt und dazu eine Lösung von Iod im gleichen Lösemittel zutropft.

6. Verfahren nach Anspruch 5, dadurch gekennzeichnet, daß man bei Verwendung der α-Kristallphase des unsubstituierten 6,13-Dihydrochinacridons und ®Dowtherm A als Lösemitttel die γ-Kristallphase des unsubstituierten Chinacridons erhält.

7. Verfahren nach Ansprüchen 1 oder 2, dadurch gekennzeichnet, daß man das 6,13-Dihydrochinacridon der genannten Formel (2) bei niedriger Temperatur mit Iod

vereinigt und anschließend im organischen Lösemittel zum Sieden erhitzt.

8. Verfahren nach Anspruch 7, dadurch gekennzeichnet, daß man bei Verwendung der α-Kristallphase des unsubstituierten 6,13-Dihydrochinacridons und ®Dowtherm A als Lösemittel die ß-Kristallphase des unsubstituierten Chinacridons erhält.

9. Verfahren nach Ansprüchen 1 oder 2, dadurch gekennzeichnet, daß man als Ausgangsverbindung ein lineares 6,13-Dihydrochinacridon der genannten Formel (2) einsetzt, wie es ohne Zwischenisolierung nach Ringschluß von 3,6-Dihydro-2,5-diarylamino-terephthalsäureester der allgemeinen Formel

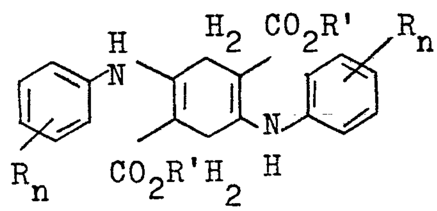

in welcher R und n die in Anspruch 1 genannten Bedeutungen haben, und R' eine Alkyl$_{C_1-C_4}$gruppe bedeutet, in an sich bekannter Weise in einem der genannten inerten organischen Lösemittel in Suspension anfällt.